Europäisches Patentamt

European Patent Office

Office européen des brevets

(11) Numéro de publication: **0 337 891**
A1

(12) **DEMANDE DE BREVET EUROPEEN**

(21) Numéro de dépôt: **89401029.7**

(22) Date de dépôt: **14.04.89**

(51) Int. Cl.⁴: **B 65 G 35/06**
B 65 G 17/00, B 65 G 19/02

(30) Priorité: **14.04.88 FR 8804968**

(43) Date de publication de la demande:
**18.10.89 Bulletin 89/42**

(84) Etats contractants désignés:
**AT BE CH DE ES FR GB GR IT LI LU NL SE**

(71) Demandeur: **S.G.I.E. INDUSTRIES S.A.**
**Z.I. des Chanoux 81/85, Rue Ampère**
**F-93330 Neuilly/Marne (FR)**

(72) Inventeur: **Wack, André**
**23, Avenue Beauséjour**
**F-93160 Noisy le Grand (FR)**

**Cosset, André**
**5, Claude Lebret**
**F-93460 Gounay sur Marne (FR)**

(74) Mandataire: **CABINET BONNET-THIRION**
**95 Boulevard Beaumarchais**
**F-75003 Paris (FR)**

(54) Convoyeur en pente à accumulation de navettes par chaîne(s) d'entraînement sans fin.

(57) Un convoyeur selon l'invention se caractérise en ce que le chemin de guidage de la ou des chaînes d'entraînement est aménagé pour conférer à celle(s)-ci, en plus des zones d'extrémité (200, 201) où elles s'enroulent sur un tambour denté, au moins un tronçon en pente (400, 600) pour assurer en fonctionnement un changement de niveau en hauteur des navettes associées entraînées par rapport à un plan horizontal de référence (X-X).

Chaque navette associée au convoyeur comporte un dispositif de freinage éventuellement sous la commande d'un dispositif de débrayage-embrayage insensible au seul rapprochement des navettes dans les zones d'accumulation du convoyeur.

FIG.11

EP 0 337 891 A1

Bundesdruckerei Berlin

## Description

### Convoyeur en pente à accumulation de navettes par chaîne(s) d'entraînement sans fin

La présente invention concerne un convoyeur à accumulation de navettes selon l'énoncé du préambule de la revendication 1 . Un tel convoyeur est connu du brevet EP 190 950 (Automobiles Peugeot et Automobiles Citroën).

Ce convoyeur à accumulation comme les autres convoyeurs à accumulation connus, mis à part leurs zones d'extrémité logeant des tambours dentés circulaires d'extrémité, ne présentent que des tronçons rectilignes sensiblement horizontaux.

Ainsi les navettes associées à ces convoyeurs n'effectuent, hormis dans les zones d'extrémités, que des parcours rectilignes sensiblement horizontaux et ne sont par conséquent aptes qu'au convoyage de charges toujours à un niveau constant par rapport à un sol horizontal de référence.

Les convoyeurs de l'art antérieur ne peuvent être installés que dans un espace libre de tout encombrement.

La Demanderesse s'est fixée comme but principal d'obtenir un convoyeur à accumulation de navettes par chaîne(s) d'entraînement sans fin permettant le franchissement d'obstacles en hauteur par les navettes transportant une charge ou encore le transport de pièces d'un poste de travail à un autre situé à un niveau différent.

Ce but principal est atteint par le convoyeur ayant les caractéristiques énoncées dans la partie caractérisante de la revendication 1.

De préférence le dispositif de freinage de chaque navette associée est réglable à une valeur déterminée de couple de freinage selon l'inclinaison maximum desdits tronçons de chaîne en pente et selon la charge maximum transportée.

Le dispositif de freinage réglable permet de créer une "friction" réglable entre la navette et la chaîne d'une manière indépendante de la position spatiale de la navette sur le convoyeur.

En effet cette "friction" s'applique tout au long du parcours de la navette sur son convoyeur, y compris dans toute zone d'extrémité en arc de cercle du convoyeur car la roue dentée freinée de la navette reste toujours en prise avec la chaîne d'entraînement.

Ce dispositif de freinage permet donc s'il est réglé à une valeur suffisament importante d'éviter de faire appel pour le convoyeur associé, à des moyens additionnels pour entraîner la navette dans les zones d'extrémité semi-circulaires où a lieu son retournement. Cependant d'une manière préférée le corps de la navette de la présente invention comporte en outre des moyens de patins connus en soi de la demande de brevet EP 256 926 (WACK et COSSET) pour le franchissement desdites zones d'extrémité. Cette dernière disposition permet d'adapter au mieux la valeur de la "friction" de la navette sur la chaîne en fonction de la pente du convoyeur et des charges transportées et d'obtenir ainsi une sécurité maximum.

La force de "friction" F s'opposant à un déplacement relatif de la navette par rapport à la chaîne de traction du convoyeur doit être supérieure à une certaine valeur U qui dépend du poids $P_1$ de la navette, du poids $P_2$ de sa charge, de l'inclinaison de la navette et de l'inclinaison de la chaîne par rapport à un plan de référence horizontal X-X.

Si le convoyeur a un tronçon rectiligne de chaîne d'entraînement formant un angle $\alpha$ avec le plan X-X, on doit avoir $F > (P_1 + P_2)$ sinus $\alpha$.

Si le convoyeur à accumulation ne convoie pas des charges dans les zones d'extrémité semi-circulaires et si celles-ci ne possèdent pas de moyens additionnels pour entraîner la navette dans ces zones, le réglage du dispositif de freinage doit être effectué également de façon que $F > P_1$.

Ainsi le dispositif de freinage doit produire un couple de freinage qui, pour un mouvement continu sans accélération de la chaîne d'entraînement, devra être supérieur à une valeur prédéterminable selon les paramètres d'utilisation du convoyeur.

Ainsi tout dispositif de freinage apte à produire un couple de freinage supérieur à cette valeur prédéterminable est utilisable dans la présente invention.

De préférence le dispositif de freinage est également réversible pour fournir le même couple de freinage quel que soit le sens de rotation possible de la ou des roues dentées freinées en prise avec la ou les chaîne(s).

En effet sur une pente ascendante, une navette a tendance à reculer vers le bas, alors que sur une pente descendante la même navette a tendance à avancer vers le bas.

Le dispositif de freinage réversible préféré comporte au moins un plateau et au moins un contre-plateau montés rotatifs autour d'un axe de rotation commun, un contact à friction étant établi, sous l'action d'un moyen de rappel réglable, entre plateau(x) et contre-plateau(x), chaque plateau étant attelé en rotation à la ou une desdites roues dentées selon un premier rapport, chaque contre-plateau étant attelé en rotation à la ou une desdites roues dentées selon un second rapport différent du premier, de façon qu'un déplacement relatif de la navette par rapport à la (les) chaînes du convoyeur entraîne une rotation de vitesse angulaire différente mais de même sens pour le(s) plateau(x) et contre-plateau(x).

De préférence également chaque navette associée comporte en outre un dispositif de débrayage-embrayage du dispositif de freinage, ce dispositif de débrayage-embrayage étant insensible au seul contact des navettes entre elles dans les zones d'accumulation de celles-ci.

Cette dernière disposition permet d'accumuler les navettes sur un tronçon de chaîne(s) ascendant sans avoir un phénomène de broutement comme celui que l'on obtiendrait en utilisant les navettes freinées de l'art antérieur des brevets FR 1 316 160 (CARGILL) et FR 1 376 066 (CARGILL et FORSTER).

Par contre, le dispositif de débrayage-embrayage peut être sélectivement commandé lorsque les navettes sont accumulées sur un tronçon de chaîne(s) horizontal ou descendant lorsqu'il n'y a pas de risque de recul des navettes par rapport au sens d'entraînement de la (des) chaîne(s).

Un moyen d'arrêt escamotable disposé sur le convoyeur et agissant sur le dispositif de débrayage-embrayage permet par débrayage de diminuer puis de supprimer la force de "friction" qui s'oppose au déplacement relatif de la navette par rapport à la ou les chaîne(s).

L'escamotage du moyen d'arrêt permet de recréer la force de "friction" F par embrayage du dispositif de débrayage.

Une disposition préférentielle qui sera décrite en détail par la suite permet le débrayage des dispositifs de freinage de navettes accumulées sur un tronçon rectiligne de chaîne à l'aide d'une seule butée escamotable venant en butée sur l'avant d'une tige coulissante de la première navette en avant d'une accumulation rectiligne de navettes en contact les unes avec les autres.

De manière réversible l'escamotage de ladite butée a pour effet de rembrayer simultanément toutes les navettes de l'accumulation rectiligne. Cette disposition permet d'éviter une trop grande poussée sur le moyen d'arrêt et une trop grande tension de chaîne(s) d'entraînement, lorsque les zones d'accumulations de navettes correspondent à des tronçons de chaînes descendants ou horizontaux.

D'autres caractéristiques et avantages de l'invention ressortiront d'ailleurs de la description qui va suivre, donnée à titre d'exemple en référence aux dessins annexés dans lesquels :

la figure 1 est une vue de dessus avec arrachement d'une première forme de réalisation d'une navette équipée d'un dispositif de freinage ;

la figure 2 est une vue en coupe selon la ligne II-II de la figure 1 ;

la figure 3 est une vue en coupe selon la ligne III-III de la figure 1 ;

la figure 4 est une vue schématique d'une navette N selon l'invention comportant en outre des moyens de patins connus en soi pour le franchissement des zones d'extrémités du convoyeur;

la figure 5 est une vue de dessus avec arrachement d'une deuxième forme de réalisation d'une navette avec deux roues dentées d'entraînement solidaires d'un seul axe rotatif;

la figure 6 est une vue de dessus avec arrachement d'une autre navette équipée à la fois d'un dispositif de freinage et d'un dispositif de débrayage-embrayage ;

la figure 7 est une vue en coupe selon la ligne VII-VII de la figure 6 ;

la figure 8 est une vue en coupe selon la ligne VIII-VIII de la figure 6 ;

la figure 9 est une vue schématique de côté d'un convoyeur monopente associé à au moins une navette N selon l'invention ;

la figure 10 est une vue schématique de côté d'un convoyeur monopente associé à une navette N selon l'invention comprise dans un train de navettes attelées ;

la figure 11 est une vue schématique de côté d'un convoyeur multipentes associé à au moins une navette N selon l'invention ;

la figure 12 est un agrandissement de la figure 11 montrant un tronçon de raccordement incurvé compris entre deux tronçons rectilignes du convoyeur ;

la figure 13 est une vue en coupe selon la ligne XIII-XIII de la figure 12.

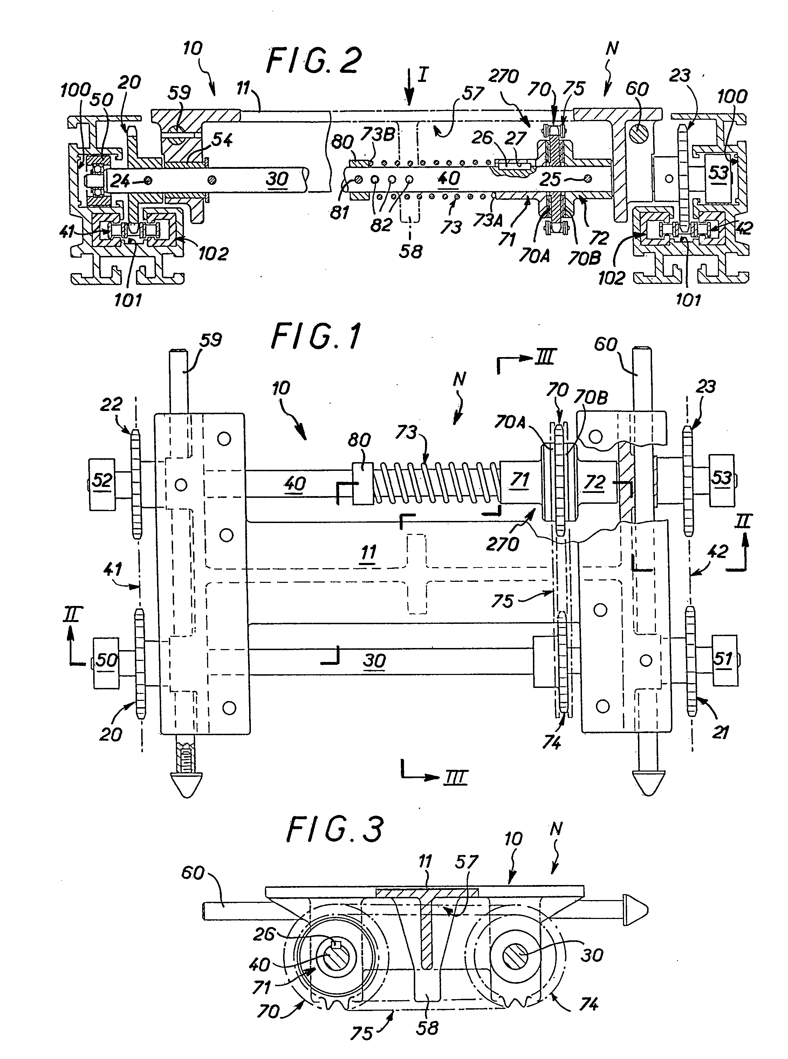

Suivant une première forme de réalisation illustrée aux figures 1 à 3, une navette N comporte un corps 10 globalement en forme de H, équipée de chaque côté latéral d'une paire de roues dentées d'entraînement 20, 22 et 21, 23, chaque roue, identique aux autres, étant montée solidaire sur un axe rotatif, à la manière de la roue dentée 20, dite première, qui est montée solidaire sur un premier axe rotatif 30 à l'aide d'une goupille 24. La roue dentée 22, dite deuxième est montée du même côté de la navette que la roue dentée 20, sur un second axe rotatif 40.

De la même manière, de l'autre côté de la navette les roues dentées 21 et 23 sont montées solidaires respectivement sur le premier et le second axe rotatif 30 et 40.

Comme le montrent les figures 1 et 2, les roues dentées 20 et 22 collatérales sont aptes à être en prise avec la première chaîne d'entraînement 41 du convoyeur alors que les roues dentées 21 et 23 collatérales sont aptes à être en prise avec la seconde chaîne d'entraînement 42 du convoyeur. Le convoyeur comporte un chemin de guidage rectiligne 101 pour chaque chaîne d'entraînement 41, 42.

Chaque chemin de guidage comporte un élément de guidage rectiligne 102 constitué par un tronçon de profilé en matière plastique.

La navette comporte quatre galets de roulement 50, 51, 52, 53 coopérant par paire collatérale 50, 52 et 51, 53 avec un chemin de roulement 100 correspondant du convoyeur.

Ainsi chaque axe rotatif 30, 40 qui est équipé à chacune de ses extrémités d'un galet de roulement 50, 51, 52, 53, est monté librement rotatif à frottement doux dans des paliers 54 portés par le corps 10 de la navette.

Le corps 10 de la navette comporte sous sa sous-face 57, un saillant 58 destiné à coopérer avec des moyens d'arrêt de la navette disposée le long du convoyeur. Le corps 10 de la navette est également équipé vers chacun de ses côtés latéraux d'une tige butoir 59 et 60, chacune solidaire du corps 10 et d'une longueur choisie pour maintenir les corps des navettes N à une certaine distance prédéterminée les uns des autres en accumulation sur les tronçons rectilignes du convoyeur.

Le dispositif de freinage réversible de la navette comprend un plateau 270 comportant un disque denté 70 muni sur chacune de ses faces et de manière solidaire, d'une garniture de friction 70A, 70B.

Ainsi chaque plateau 270 comporte au moins une garniture de friction 70A, 70B.

La garniture peut par exemple avoir un coefficient de friction f de 0,3 et être une garniture commerciale.

Le disque 70 muni de ses garnitures est monté rotatif et coulissant sur le second axe rotatif 40 entre deux contre-plateaux 71, 72 calés en rotation sur ce même second axe rotatif, l'un de ces contre-plateaux, dit de butée 72, étant solidarisé audit second axe rotatif 40 par une goupille 25, l'autre contre-plateau 71 dit coulissant, pouvant coulisser sur son axe 40, grâce à la présence sur cet axe d'une clavette 26 de guidage d'une rainure 27 correspondante du contre-plateau 71, vers le disque denté 70 et le contre-plateau de butée 72 sous l'action d'un moyen de rappel constitué ici par un ressort 73 de tension réglable.

Le ressort cylindrique de compression est enfilé sur le second axe rotatif 40, une extrémité 73A de ce ressort étant en butée sur le contre-plateau coulissant 71, l'autre extrémité 73B de ce ressort étant en butée sur un anneau 80 dont la position sur le second axe rotatif est réglable grâce à une goupille amovible 81 qui peut s'introduire au choix dans une série d'alésages complémentaires 82 espacés régulièrement le long de l'axe rotatif 40.

Bien entendu d'autres systèmes de positionnement de l'anneau 80 sur le second axe rotatif peuvent être mis en oeuvre. Dans une autre forme de réalisation non représentée, l'anneau forme écrou sur une portion filetée correspondante du second axe rotatif, la position de l'anneau-écrou étant assurée par la présence d'un contre-écrou.

Un pignon denté 74 dit premier est calé en rotation sur le premier axe rotatif 30. Ce pignon 74 est attelé en rotation au disque denté 70 par une courte chaîne sans fin 75.

Le nombre de dents $d_1$ du disque denté 70 est différent du nombre de dents $d_2$ du pignon 74. Par exemple on peut avoir $d_1 = 19$ dents et $d_2 = 17$ dents.

Le fonctionnement de cette navette sur un convoyeur à accumulation est le suivant.

Si la navette est arrêtée sur le convoyeur par un moyen d'arrêt butant par exemple sur le saillant 58, les chaînes 41, 42 animées d'un mouvement continu entraînent les quatre roues dentées d'entraînement identiques 20, 21, 22, 23 à tourner sur elles-mêmes. Cette rotation des roues dentées entraînent une rotation dans le même sens et à la même vitesse V du premier axe rotatif 30 et du second axe rotatif 40.

La rotation du premier axe rotatif et du pignon 74 entraîne la rotation dans le même sens du disque denté 70 à une vitesse $V' = V. \frac{17}{19}$.

Les contre-plateaux 71 et 72 calés en rotation au second axe rotatif 40 tournent à la vitesse V et l'on observe que le rapport de la vitesse de rotation du disque denté 70 à la vitesse de rotation des contre-plateaux est de $\frac{17}{19}$.

Si par exemple les roues dentées 20, 21, 22, 23 tournent à 49,6 tours/min, la vitesse de rotation du disque denté 70 sera de 44,4 t/min et la vitesse de friction entre disque denté 70 muni de ses garnitures et les contre-plateaux sera de 49,6 - 44,4 soit de 5,2 t/min.

Cette vitesse de friction se traduit par une force F de friction de même sens que celui du déplacement de la chaîne et qui dépend de la tension de ressort 73.

Si la navette est en montée sur un tronçon de convoyeur de pente α, la force positive s'exerçant sur le moyen d'arrêt est sensiblement égale à $F-(P_1 + P_2)\sin \alpha > 0$.

Si la navette est en descente sur un tronçon de convoyeur de pente α cette force est de $F + (P_1 + P_2)\sin \alpha$.

Si le moyen d'arrêt est escamoté, le couple de friction s'exerçant sur les quatre roues dentées 20, 21, 22, 23 ralentit leur rotation jusqu'à leur immobilisation par rapport à la chaîne en mouvement à vitesse constante, et la navette se déplace le long du convoyeur.

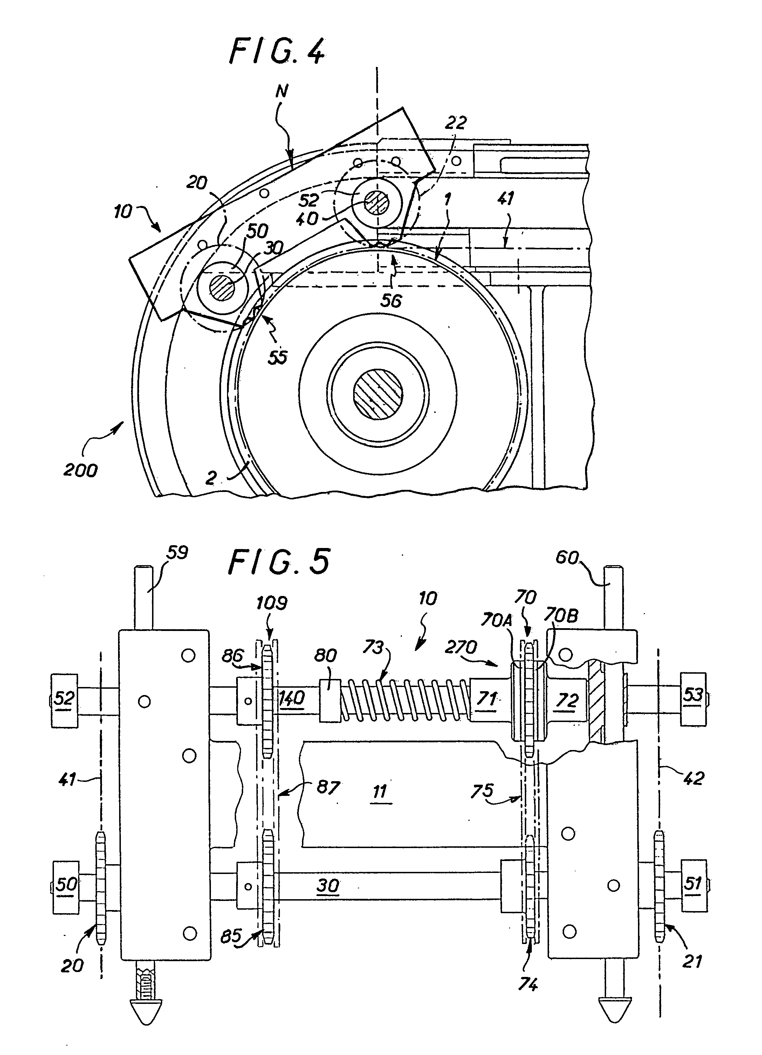

La figure 4 montre une navette N selon l'invention, dans une autre forme de réalisation, associée à un convoyeur à accumulation comportant au moins une chaîne d'entraînement sans fin 41 s'enroulant sur un tambour d'extrémité 1, disposé dans une zone d'extrémité 200 semi-circulaire, où d'une manière connue en soi ledit corps 10 de la navette comporte en outre des moyens de patins 55, 56 aptes à coopérer avec un anneau de contact 2 élastiquement déformable pour le franchissement de ladite zone d'extrémité 200.

La figure 5 montre une navette identique en tout point à la navette de la figure 1, sauf que les deux roues dentées d'entraînement 22 et 23 ont été supprimées, ce qui a pour conséquence de transformer l'ancien second axe rotatif 40 en un axe dit de rotation 140, et sauf qu'il a été ajouté un dispositif d'entraînement 109 de l'axe de rotation 140 par la rotation du premier axe rotatif 30.

Ce dispositif d'entraînement 109 comporte un pignon denté 85, dit deuxième, calé en rotation sur le premier axe rotatif 30, et attelé en rotation à un pignon denté 86, dit troisième calé en rotation sur ledit axe de rotation 140 par une courte chaîne sans fin 87, dite seconde.

Dans cette forme de réalisation les deuxième et troisième pignons dentés 85, 86 ont un même nombre de dents. Il apparaîtra évident pour l'homme de l'art, que le nombre de dents des pignons 74, 85, 86 et du disque denté 70 peuvent faire l'objet de toute combinaison qui conduit à une différence de vitesse de rotation des contre-plateaux 71, 72 et du disque denté 70 muni de ses garnitures 70A, 70B.

La forme de réalisation de la navette représentée à la figure 5 indique clairement que le dispositif de freinage réglable décrit en référence à la figure 3 selon l'invention, n'a besoin pour fonctionner que d'un seul axe rotatif 30 et donc que d'une seule roue dentée d'entraînement solidaire de cet axe rotatif.

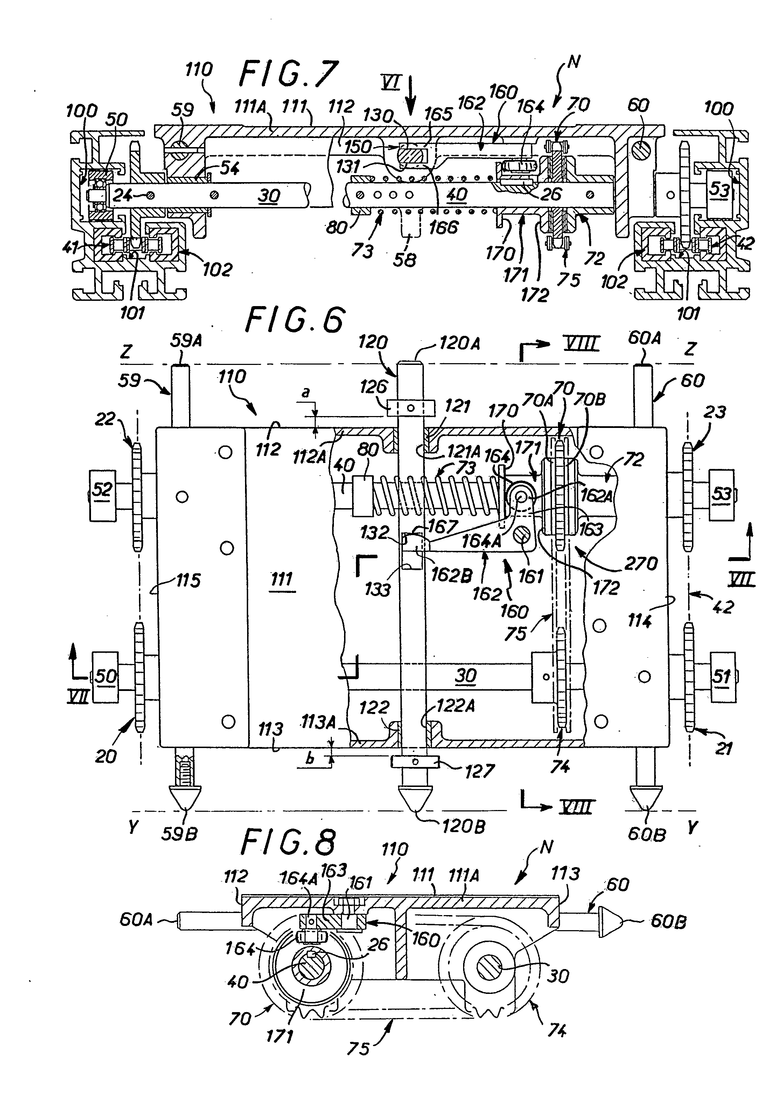

Les figures 6 à 8 montrent une navette N perfectionnée équipée d'un dispositif de débrayage-embrayage associé au dispositif de freinage décrit en référence aux figures 1 à 5.

La figure 6 montre une navette où l'on retrouve, pour l'essentiel, les caractéristiques de la navette de la figure 3.

Le corps 110 de la navette N possède une face supérieure 111 de forme rectangulaire, une face avant 112, une face arrière 113 et deux faces latérales 114, 115.

Le corps est muni de deux tiges butoirs 59 et 60 de longueur identique l, formant tampon avant et tampon arrière.

Ces tiges butoirs sont chacune solidarisées au corps 110, parallèles entre elles et au plan général moyen défini par le premier axe rotatif 30 et le second axe rotatif 40.

Ces tiges sont par ailleurs situées vers les faces latérales de la navette et disposées d'une manière orthogonale aux axes rotatifs 30 et 40. Les sections circulaires 59A et 60A des bouts avant de ces tiges butoirs 59, 60, formant tampon avant, définissent un plan de contact Z-Z avec les tiges butoirs d'une navette analogue.

Le plan Z-Z est ici sensiblement parallèle à la face avant 112.

De même les extrémités 59B et 60B des bouts arrières de ces tiges butoirs 59, 60, formant tampon arrière, définissent à l'arrière un plan de contact Y-Y avec les tiges butoirs d'une navette N analogue.

Le plan Y-Y est ici sensiblement parallèle à la face arrière 113.

Dans un plan médian de la navette, orthogonal aux plans Y-Y et Z-Z, est disposée une tige cylindrique de butée 120 de longueur l identique à celle des tiges butoirs 59, 60, donc à la distance séparant les plans Z-Z et Y-Y.

Cette tige de butée 120 est montée coulissante dans le corps de la navette grâce aux bagues de coulissement 121, 122, montées respectivement dans les alésages 121A, 122A de la paroi avant 112A et de la paroi arrière 113A.

Ce coulissement est limité par une bague de butée avant 126 et une bague de butée arrière 127 montées chacune solidaire de la tige de butée, respectivement vers l'extrémité avant 120A et l'extrémité 120B de la tige de butée 120.

Lorsque le dispositif de débrayage est au repos, la bague de butée avant 126 est disposée à la distance a de la face avant 112 alors que la bague de butée arrière 127 est disposée à la distance b de la face arrière 113.

La tige de butée 120 comporte deux évidements symétriques par rapport à son axe géométrique et qui déterminent deux méplats parallèles 130, 131, bordés chacun d'une manière orthogonale par des parois avant 132, et arrière 133, parallèles entre elles et se terminant en arc de cercle.

Un levier en équerre 160 vient coopérer avec la tige de butée 120 pour transformer un coulissement longitudinal de la tige de butée en un déplacement transversal de la manière qui sera décrite ci-après.

Le levier en équerre 160 est monté pivotant autour d'un pivot 161 solidarisé orthogonal à la paroi supérieure 111A du corps 110 de la navette. Un bras long 162 de ce levier est associé par son extrémité 162B à la tige de butée 120 alors que le bras court 163 porte à son extrémité 162A un galet tournant 164 coopérant avec un contre-plateau coulissant 171 comme cela sera détaillé par la suite.

L'extrémité 162B en fourchette à deux ailes 165, 166 vient chevaucher en contact glissant les deux méplats 130, 131. Les bords arrondis 167 de ces ailes 165, 166 sont aptes à venir en contact avec les parois avant 132 des évidements, alors que les parois arrière 133 ne peuvent jamais venir en contact avec l'extrémité 162B en fourchette du bras 162 de levier.

Le contre-plateau coulissant 171 a globalement la forme d'une poulie à gorge en U solidaire en rotation sur son axe rotatif 40 de la même façon que décrite à la figure 3. Un des flancs de cette poulie sert de butée au ressort cylindrique de compression 73, alors que l'autre flanc est en contact de friction avec la garniture 70A du disque denté 70.

Le galet tournant 164 autour d'un axe 164A parallèle au pivot 161, est au contact avec la paroi 170, distale et parallèle au disque denté 70, de la gorge en U, ce même galet ne pouvant pas s'appuyer sur la paroi proximale 172 au disque denté 70, de cette gorge en U.

La distance $l_1$ entre l'axe géométrique du pivot 161 et celui de l'axe 164A est celle du bras de levier court agissant sur le contre-plateau coulissant 171, alors que la distance $l_2$ légèrement variable entre la zone de contact entre les bords arrondis 167 des ailes 165, 166 et l'axe géométrique du pivot 161 détermine la longueur effective du bras de levier long 162 attelé au coulissement de l'avant vers l'arrière de la tige de butée 120.

Dans une forme de réalisation préférée le rapport $l_2/l_1$ est voisin de 6, pour un poids total $P_1 + P_2$ (navette chargée de l'objet transporté) de 300N et un poids $P_1$ de la navette à vide de 200N. Cette disposition permet le débrayage du dispositif de freinage par l'intermédiaire du levier 160 par la navette en descente sur un convoyeur de pente $\alpha$, la tension du ressort 73 ayant été réglée pour que cette même navette puisse rester immobile en montée sur la chaîne d'entraînement en mouvement.

Le fonctionnement du dispositif de débrayage-embrayage est le suivant. Un moyen d'arrêt sur le convoyeur forme un obstacle à la progression d'une navette en arrivant en contact seulement avec l'extrémité avant 120A de la tige de butée 120. Deux cas sont possibles :

a) la navette est arrêtée sur un tronçon de convoyeur dont la pente est nulle bien que la navette ait été réglée pour une pente $\alpha$ avec une tension de ressort 73 égale à $F_R$.

La poussée maximale exercée sur le moyen d'arrêt par la navette ne pourra dépasser la valeur de $F_R$ divisée par le rapport $l_2/l_1$ ;

b) la navette est arrêtée sur un tronçon de descente de convoyeur dont la pente $\alpha$ a été prise en considération pour régler la tension du ressort $F_R$, le poids à vide de la navette étant $P_1$, la poussée minimale qui s'exerce sur le moyen d'arrêt et donc sur la tige de butée sera de $P.\sin\alpha$ si $P_1.\sin\alpha$ multiplié par rapport $l_2/l_1$ est supérieur à $F_R$.

L'arrêt d'une première navette entraîne l'arrêt récurrent des autres navettes. En effet, l'extrémité arrière 120B d'une tige de butée 120 d'une première navette dépassera par coulissement le plan Y-Y et viendra former obstacle à l'extrémité avant du genre 120A de la tige de butée d'une deuxième navette N et ainsi de suite.

L'escamotage du moyen d'arrêt agissant sur l'extrémité avant 120A de cette première navette provoque l'embrayage du dispositif de freinage de la première navette et des suivantes.

Ainsi en pratique le dispositif de débrayage-embrayage de chaque navette a pour objet de réduire la "friction" de chaque navette sur les chaînes d'entraînements, par débrayage du dispositif de freinage lorsque les navettes sont arrêtées sur un tronçon de descente en pente ou un tronçon horizontal du convoyeur.

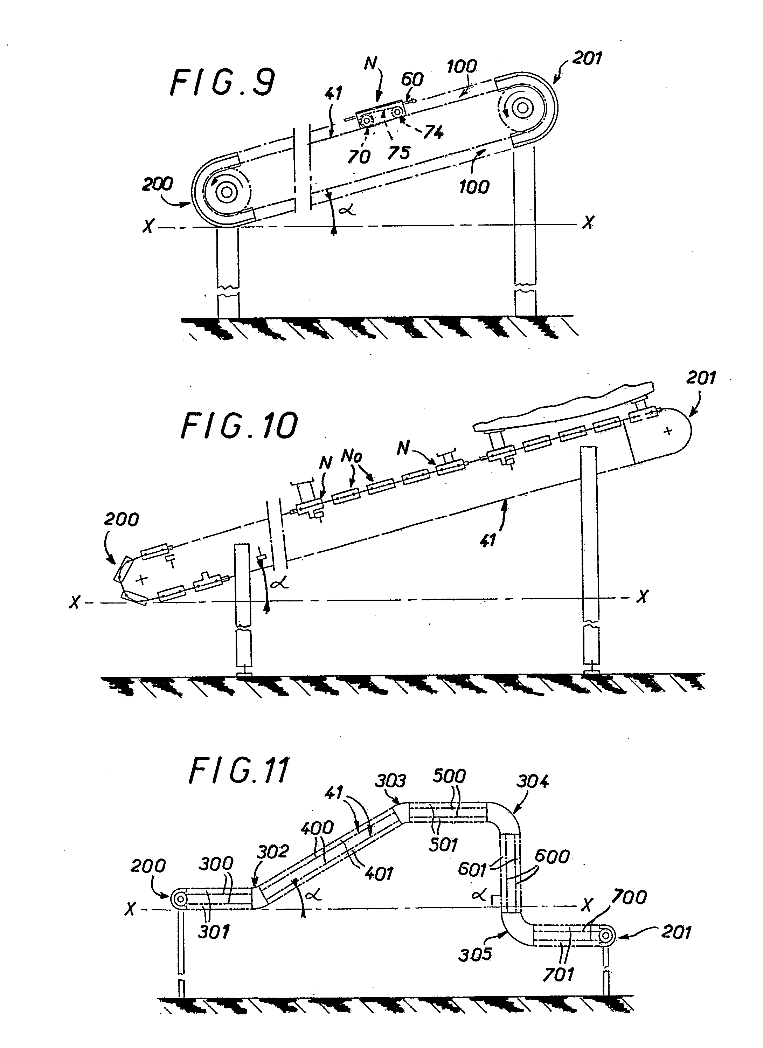

La figure 9 montre d'une manière schématique un convoyeur de l'art antérieur qui a été disposé en pente pour constituer un convoyeur selon l'invention et dont les navettes ont été remplacées par les navettes selon l'invention. Ce convoyeur comporte les moyens additionnels décrits dans les demandes de brevet précitées pour le franchissement par les navettes des zones d'extrémités semi-circulaires 200 et 201.

Ce convoyeur associé à au moins une navette selon l'invention se caractérise en ce que la chaîne d'entraînement 41, dite première, présente deux tronçons sensiblement rectilignes, chacun d'entre eux étant incliné selon un angle aigu α par rapport à un plan horizontal de référence X-X, chaque tronçon rectiligne de chaîne déterminant un tronçon rectiligne correspondant des chemins de roulement 100 du convoyeur, pour les galets de roulement 50, 51, 52, 53 de la navette.

Sur cette forme de réalisation du convoyeur selon l'invention, l'angle dièdre aigu est inférieur à 45°.

La figure 10 montre un convoyeur à accumulation faisant un angle α avec le plan de référence X-X.

Sur ce convoyeur sont disposés en prise des trains de navettes attelées.

Une navette N selon l'invention est attelée à une autre navette $N_0$ dénuée de dispositif de freinage et de tiges butoirs mais pouvant par contre comprendre une tige de butée coulissante 120 telle que décrite ci-dessus.

Une navette N selon l'invention est attelée à une autre navette N selon l'invention.

La figure 11 montre un convoyeur selon l'invention, comportant dix tronçons de chaîne sensiblement rectilignes 300, 400, 500, 600, 700 dont certains (quatre) 400, 600 sont inclinés selon un angle aigu par rapport à un plan de référence X-X horizontal, chaque tronçon rectiligne de chaîne déterminant un tronçon rectiligne correspondant 301, 401, 501, 601, 701 du convoyeur comportant les chemins de roulement 100 des galets 50, 51, 52, 53, et le chemin de guidage 101 de la chaîne.

Dans cette forme de réalisation le tronçon rectiligne de chaîne en pente 600 forme un angle aigu égal à 90° avec le plan de référence X-X horizontal. Autrement dit le tronçon de convoyeur 601 est vertical.

De plus chaque tronçon rectiligne de chaîne 300, 400, 500, 600, 700 se continue soit par un tronçon de chaîne incurvé dans un tronçon de raccordement incurvé 302, 303, 304, 305 du convoyeur, soit par un tronçon de chaîne incurvé sur un tambour denté 1.

Les figures 12 et 13 montrent agrandis les tronçons de raccordement incurvés 303 du convoyeur selon l'invention, se raccordant à des tronçons rectilignes 401, 501 du convoyeur.

Chaque tronçon rectiligne 401, 501 du convoyeur comporte, comme cela a été rappelé ci-dessus, un tronçon de profilé qui délimite d'une part les dits chemins de roulement 100 pour les galets des navettes N, et d'autre part un chemin de guidage 101 de chaque chaîne d'entraînement, ces chemins se raccordant de manière tangentielle à des chemins de roulement 800 et de guidage 801 incurvés correspondants d'un tronçon de raccordement 303 incurvé en arc de cercle.

Comme le montre la figure 13, les chemins de roulement 800 et de guidage 801 incurvés sont définis par des pièces façonnées au rayon de courbure désiré et réunies ensuite par des vis 860, 861 à un flasque 870.

Les chemins de guidage 801 incurvés de la chaîne comportent des éléments de guidage 850 incurvés, en matière plastique obtenus par moulage. Ces éléments de guidage incurvés 850 se raccordent tangentiellement aux éléments de guidage rectilignes 102 constitués par des tronçons de profilé en matière plastique montés dans les tronçons rectilignes des chemins de guidage du convoyeur.

**Revendications**

1. Convoyeur à accumulation de navettes comportant un chemin de guidage (101) d'au moins une chaîne d'entraînement sans fin (41, 42) des navettes associées (N), la chaîne s'enroulant sur au moins un tambour denté (1), l'un au moins de ces tambours dentés (1) étant actionnable en rotation par un moteur, chaque navette associée (N) comportant au moins une roue dentée (20, 21, 22, 23) en prise avec la chaîne d'entraînement (41, 42) correspondante du convoyeur, des galets de roulement (50, 51, 52, 53) aptes à coopérer avec des chemins de roulement (100) prévus à cet effet dans le convoyeur, ainsi qu'un dispositif de freinage apte à s'opposer à la libre rotation de la ou des roues dentées, donc à un mouvement de déplacement relatif de la navette par rapport à la (les) chaîne(s) d'entraînement (41, 42), caractérisé en ce que le chemin de guidage (101) est aménagé pour conférer à la (les) chaîne(s) d'entraînement, en plus des zones d'enroulement de celle(s)-ci sur le (les) tambours(s) denté(s) (1), au moins un tronçon en pente (400, 600) pour assurer en fonctionnement un changement de niveau en hauteur des navettes associées entraînées.

2. Convoyeur selon la revendication 1, caractérisé en ce que le dispositif de freinage de chaque navette associée est réversible et réglable à une valeur déterminée du couple de freinage selon l'inclinaison dudit tronçon de chaîne en pente ou l'inclinaison maximum desdits tronçons de chaîne en pente et selon la charge maximum transportée.

3. Convoyeur selon la revendication 1 ou 2, caractérisé en ce que chaque navette associée comporte en outre un dispositif de débrayage-embrayage du dispositif de freinage, ce dispositif de débrayage-embrayage étant insensible au seul contact des navettes entre elles dans les zones d'accumulation de celles-ci.

4. Convoyeur selon l'une quelconque des revendications 1 à 3, caractérisé en ce que chaque tronçon de chaîne en pente (400, 600) est sensiblement rectiligne.

5. Convoyeur selon la revendication 4, caractérisé en ce que la chaîne comporte plusieurs tronçons rectilignes (300, 400, 500, 600, 700) dont certains (400, 600) sont inclinés selon un angle aigu par rapport à un plan de référence (X-X) horizontal, chaque tronçon rectiligne de chaîne déterminant un tronçon rectiligne correspondant (301, 401, 501, 601, 701) du convoyeur comportant les chemins de roulement (100) des galets (50, 51, 52, 53) et le chemin de guidage (101) de la chaîne.

6. Convoyeur selon la revendication 5, caractérisé en ce que chaque tronçon rectiligne de chaîne (300, 400, 500, 600, 700) se continue soit par un tronçon de chaîne incurvé dans un tronçon de raccordement incurvé (302, 303, 304, 305) du convoyeur, soit par un tronçon de chaîne incurvé sur un tambour denté (1).

7. Convoyeur selon la revendication 6, caractérisé en ce que chaque tronçon de raccordement incurvé (302, 303, 304, 305) du convoyeur comporte des chemins de roulement (800) et de guidage de chaîne (801) qui se raccordent de manière tangentielle respectivement aux chemins de roulement (100) et de guidage de chaîne (101) des tronçons rectilignes (301, 401, 501, 601, 701) du convoyeur.

8. Convoyeur selon l'une quelconque des revendications 2 à 7, caractérisé en ce que le dispositif de freinage réversible comporte au moins un plateau (270) et au moins un contre-plateau (71, 171, 72) montés rotatifs autour d'un axe de rotation commun, un contact à friction étant établi, sous l'action d'un moyen de rappel réglable, entre plateau(x) et contre-plateau(x), chaque plateau étant attelé en rotation à la ou une desdites roues dentées (20, 21, 22, 23) selon un premier rapport, chaque contre-plateau étant attelé en rotation à la ou lesdites roues dentées (20, 21, 22, 23) selon un second rapport différent du premier rapport, de façon qu'un déplacement relatif de la navette par rapport à la (les) chaîne(s) (41, 42) du convoyeur entraîne une rotation de vitesse angulaire différente, mais de même sens pour le(s) plateau(x) et contre-plateau(x).

9. Convoyeur selon la revendication 8, caractérisé en ce que le moyen de rappel réglable est un ressort (73) mis sous une tension déterminée.

10. Convoyeur selon la revendication 8 ou 9, caractérisé en ce que chaque plateau (270) comporte au moins une garniture de friction (70A, 70B).

11. Convoyeur selon l'une quelconque des revendications 8 à 10, caractérisé en ce que chaque navette comporte un corps (110) muni de tampons avant et de tampons arrière solidarisés à celui-ci, les tampons avant définissant un plan de contact avant (Z-Z) et les tampons arrière un plan de contact arrière (Y-Y) parallèles entre eux et en ce que le dispositif de débrayage réversible comporte une tige de butée (120), ayant une longueur égale à la distance séparant les plans (Z-Z) et (Y-Y), ne dépassant pas à l'équilibre ces dits plans, apte à coulisser longitudinalement par rapport au corps (110) de la navette de façon que son extrémité arrière (120B) dépasse vers l'arrière le plan (Y-Y), et attelée par un levier (160) à un contre-plateau (171) coulissant sur son axe de rotation de manière qu'un coulissement de la tige de butée (120) de l'avant vers l'arrière de la navette éloigne le contre-plateau (171) du plateau (270) en diminuant puis supprimant ladite friction.

12. Convoyeur selon la revendication 11, caractérisé en ce que la tige de butée (120) porte solidaire, vers chacune de ses extrémités avant et arrière, une bague de butée (126, 127) limitant dans les deux sens la course de son coulissement.

13. Navette, apte à être associée à un convoyeur à accumulation de navettes par chaîne(s) d'entraînement sans fin présentant au moins un tronçon en pente, comportant les caractéristiques connues de la navette de la revendication 1 combinées avec les caractéristiques d'au moins l'une des revendications 2, 3, 8 à 12.

FIG.2

FIG.1

FIG.3

## FIG. 4

## FIG. 5

FIG.7

FIG.6

FIG.8

FIG.9

FIG.10

FIG.11

Office européen
des brevets

RAPPORT DE RECHERCHE EUROPÉENNE

Numero de la demande

EP 89 40 1029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-1 376 066 (CARGILL) <br> * En entier * | 1-7 | B 65 G 35/06 <br> B 65 G 17/00 <br> B 65 G 19/02 |
| A | | 9-12 | |
| D,Y | EP-A-0 190 950 (PEUGEOT) <br> * En entier * | 1-7 | |
| A | | 13 | |
| A | US-A-3 631 967 (CONVERSE et al.) <br> * Figures 7,8; colonne 6, ligne 31 - colonne 7, ligne 4 * | 8-11 | |

DOMAINES TECHNIQUES RECHERCHES (Int. Cl.4)

B 65 G

Le présent rapport a été établi pour toutes les revendications

| Lieu de la recherche | Date d'achèvement de la recherche | Examinateur |
|---|---|---|
| LA HAYE | 13-06-1989 | WERNER D.M. |

EPO FORM 1503 03.82 (P0402)